# EUROPÄISCHE PATENTSCHRIFT

(11) **EP 1 000 374 B1**
(45) Veröffentlichungstag und Bekanntmachung des Hinweises auf die Patenterteilung: **26.03.2003**
(21) Anmeldenummer: 98949935.5
(22) Anmeldetag: 24.08.1998
(51) Int. Cl.: G02B 13/00, G02B 23/00

(54) **ENDOSKOPOBJEKTIV**
ENDOSCOPIC LENS
OBJECTIF D'ENDOSCOPE

(30) Priorität: 22.08.1997 DE 19736617
(43) Veröffentlichungstag der Anmeldung: 17.05.2000
(73) Patentinhaber: Karl Storz GmbH & Co. KG, 78532 Tuttlingen (DE)
(72) Erfinder: LEDERER, Frank, D-78532 Tuttlingen (DE)
(74) Vertreter: Münich, Wilhelm, Dr.
(86) Internationale Anmeldenummer: DE9802478
(87) Internationale Veröffentlichungsnummer: WO99010762

(56) Entgegenhaltungen:
- DE-A- 3 537 155
- US-A- 4 684 224
- US-A- 4 976 524

## Beschreibung

### Technisches Gebiet

Die Erfindung bezieht sich auf ein Endoskopobjektiv mit einer Blickrichtung, die mit der Längsachse des Endoskops einen Winkel ungleich 0° einschließt, also auf ein Endoskopobjektiv eines sog. Schrägblick-Endoskops.

### Stand der Technik

Derartige Endoskopobjektive sind allgemein bekannt. Ein Endoskopobjektiv, von dem bei der Formulierung des Oberbegriffs des Patentanspruchs 1 ausgegangen worden ist, ist aus der DE 35 37 155 A1 bekannt

Dieses bekannte Objektiv weist ein Linsensystem auf, das das Objektfeld des Objektivs in eine Bildebene abbildet, die senkrecht zur Längsachse des Endoskops angeordnet ist Das in der Bildebene erzeugte Bild wird dann von einem Bild-Weiterleiter-System in eine proximale Bildebene weitergeleitet bzw. abgebildet Zwischen den Linsen des Linsensystems ist eine zweiteilige Prismeneinheit angeordnet, in der der Strahl an zwei Grenzflächen derart reflektiert wird, daß der Strahl in der Prismeneinheit von der gewünschten Blickrichtung in die Längsachse des Endoskops, also in die optische Achse des Bild-Weiterleiter-Systems umgelenkt wird.

Bei dem aus dieser Druckschrift bekannten Stand der Technik ist auf einer Außenseite der zweiteiligen Prismeneinheit, die von dem Strahl nicht durchsetzt werden soll, eine aus MgF₂ bestehende Schicht aufgebracht, gegen die der Strahl total reflektiert wird.

Durch die Verwendung einer zweiteiligen Prismeneinheit ist das aus der DE 35 37 155 A1 bekannte Schrägblicksystem für Endoskope aufwendig und damit teuer in der Herstellung.

Bei einem aus der US-PS 4,684,224 bekannten System ist auf der Eintrittsfläche eines Blickwinkel-Änderungsprismas eine planparallele Platte aufgebracht, auf der eine plankonkave Linse aufgekittet ist.

Durch die Verwendung dieser planparallelen Platte ist das bekannte Endoskopobjektiv ebenfalls vergleichsweise aufwendig und damit teuer. Darüber hinaus ist der Platzbedarf für die planparallele Platte nicht zu vernachlässigen.

Ferner ist es bekannt, anstelle der planparallelen Platte einen Luftspalt vorzusehen. Dies ist allerdings nur bei Endoskopen mit vergleichsweise großem Durchmesser möglich, bei Endoskopen mit einem Durchmesser von 4 mm oder weniger ist die Montage praktisch nicht mehr möglich.

### Darstellung der Erfindung

Der Erfindung liegt die Aufgabe zugrunde, ein gattungsgemäßes Endoskopobjektiv derart weiterzubilden, daß auf planparallele Platten, die auf der Eintrittsfläche des Prismas aufgebracht sind, Luftspalte oder auf zweiteilig aufgebaute Prismen verzichtet werden kann.

Eine erfindungsgemäße Lösung dieser Aufgabe ist im Patentanspruch 1 angegeben. Weiterbildungen der Erfindung sind Gegenstand der Ansprüche 2 folgende.

Erfindungsgemäß ist die Beschichtung auf der Fläche der Prismeneinheit angeordnet, die dem Deckglas des Endoskops zugewandt ist. Anders als bei dem aus der DE 35 37 155 A1 bekannten Schrägblicksystem hat die dünne Schicht, die einen Brechungsindex aufweist, der kleiner als der Brechungsindex des Materials ist, aus dem die Prismeneinheit besteht, so daß die Totalreflexion nicht gegen Luft oder ein anderes Glasmaterial, sondern gegen die dünne Schicht erfolgt, eine Doppelfunktion:

Zum einen wird sie von dem in das Objektiv eintretenden Strahl durchsetzt, zum anderen hat sie diesen Strahl, nachdem er an einer anderen Fläche reflektiert worden ist, total zu reflektieren. Die Beschichtung muß also aus optisch transparenten Materialien bestehen. Dabei ist es besonders bevorzugt, wenn die Beschichtung gleichzeitig auch als reflexminderndes Schichtsystem dient.

Das Aufbringen einer optischen Beschichtung und insbesondere einer dünnen Schicht mit einem üblichen Beschichtungsverfahren, beispielsweise durch Aufdampfen, ist verglichen mit dem Aufbringen einer planparallelen Platte vergleichsweise einfach und kostengünstig. Das Aufbringen einer optischen Beschichtung mit einer Schichtdicke von wenigen um bei einer Einfachschicht reicht aus, um Totalreflexion mit verschwindend kleinen Reflexionsverlusten zu ermöglichen.

Durch die Verwendung einer dünnen Schicht wird es unnötig, einen Luftspalt vorzusehen, so daß, da ein Element des Objektivs auf der Schicht der Prismeneinheit angeordnet werden kann (Anspruch 2), kein mechanischer Abstandshalter benötigt wird. Damit ist die Montage verglichen mit herkömmlichen Endoskopobjektiven anderer Gattung deutlich vereinfacht. Auch treten keine Absorptionsverluste wie bei der Reflexion an metallischen Schichten auf.

Insbesondere können dabei das Element und die Prismeneinheit miteinander verkittet sein.

Das Element kann ein Keil, der die Blickrichtung zusätzlich ablenkt und damit eine Einstellung der Blickrichtung erlaubt oder das distale Fenster des Endoskops sein. Dieses distale Fenster kann in üblicher Weise als plankonkave Linse ausgebildet sein.

Im Anspruch 7 ist eine bevorzugte Ausgestaltung der Prismeneinheit angegeben, gemäß der die Prismeneinheit drei optisch wirksame Flächen aufweist, von denen die Fläche, durch die der vom Objektfeld kommende Strahl in die Prismeneinheit eintritt, einen Winkel mit der Längsachse des Endoskops einschließt, eine Fläche parallel oder schräg zur Längsachse und die dritte Fläche senkrecht zur Längsachse angeordnet sind.

Bei der Ausführung gemäß Anspruch 8 kann lediglich auf die erste Fläche eine erfindungsgemäß ausgebildete Beschichtung aufgebracht sein, während die zweite Fläche verspiegelt ist

Die vorstehend genannte Ausgestaltung ist insbesondere bei 60°-Prismen von Vorteil. Dabei ist die zweite Fläche parallel zur Längsachse des Endoskops angeordnet. Ordnet man die zweite Fläche mit einem Winkel zur der Längsachse des Endoskops an, erhält man abweichende Winkel der Blickrichtung. Andere Winkel kann man auch dadurch erhalten, daß ein Keil zur zusätzlichen Ablenkung der Blickrichtung vorgesehen wird oder - wie noch ausgeführt wird - ein schräger, d.h. von 90° abweichender Durchtritt der optischen Achse durch das Eintrittsfenster zugelassen wird.

Der Keil kann - wie bereits ausgeführt - direkt auf der Beschichtung angeordnet werden.

Die Beschichtung kann aus mehreren Schichten mit unterschiedlichem Brechungsindex besteht. Dabei kann die unterste Schicht eine niedrigbrechende Schicht sein, an der die Totalreflexion erfolgt. Besonders bevorzugt ist es jedoch, wenn die unterste Schicht eine hochbrechende Schicht und insbesondere eine Haftvermittlungsschicht ist, so daß die Totalreflexion in der Beschichtung erfolgt. Insbesondere können auch mehrere niedrigbrechende Schichten vorgesehen sein. Die Totalreflexion kann dabei an oder innerhalb der Beschichtung erfolgen.

Selbstverständlich ist aber auch möglich, daß die Beschichtung ein Einschicht-System mit nur einer niedrigbrechenden Schicht ist.

Die Einstellung des Blickwinkels kann ferner auch dadurch erfolgen, daß der Lichtdurchgang durch die objektseitige Linse schräg erfolgt Die Abbildungsfehler aufgrund des schrägen Lichtdurchgangs können dann im Objektiv kompensiert werden.

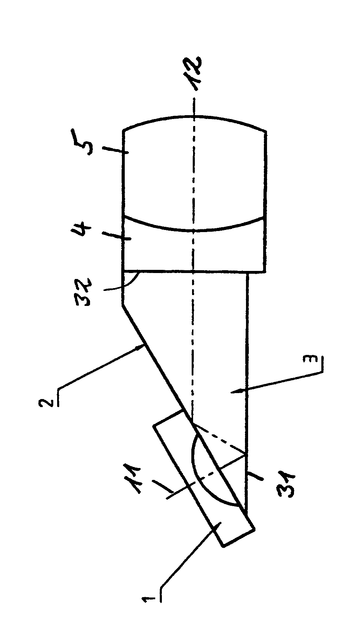

### Kurze Beschreibung der Zeichnung

Die Erfindung wird nachstehend anhand eines Ausführungsbeispieles unter Bezugnahme auf die Zeichnung näher beschrieben,
deren einzige Figur einen Längsschnitt durch ein erfindungsgemäßes Endoskopobjektiv zeigt.

### Darstellung eines Ausführungsbeispiels

Das erfindungsgemäße Endoskopobjektiv, dessen Blickrichtung 11 einen Winkel ungleich 0°, nämlich 60° mit der Längsachse 12 des nicht näher dargestellten Endoskops einschließt, weist ein aus Linsen 1, 4 und 5 sowie gegebenenfalls weiteren Linsen bestehendes Linsensystem auf, das das Objektfeld in eine Bildebene abbildet, die senkrecht zur Längsachse 12 des Endoskops angeordnet ist. Dieses Bild kann dann durch ein nicht dargestelltes Bildweiterleiter-System, wie ein Faserbündel, ein Relaislinsen-System oder einen Bildaufnehmer zum proximalen Ende des Endoskops geleitet werden.

Innerhalb des Linsensystems ist eine Prismeneinheit 3 vorgesehen, in der der Strahl an zwei Grenzflächen, nämlich den Flächen 31 und 2 reflektiert wird, so daß der Strahl in der Prismeneinheit von der gewünschten Blickrichtung 11 in die Längsachse 12 des Endoskops umgelenkt wird und damit aus der Fläche 32 in die nachgeordneten Linsen 4 und 5 eintritt.

Erfindungsgemäß ist auf der Fläche 2 der Prismeneinheit eine dünne Schicht oder ein aus mehreren Schichten bestehendes Schichtsystem mit üblichen Beschichtungsverfahren aufgebracht Wenigstens eine Schicht weist einen Brechungsindex auf, der deutlich kleiner als der Brechungsindex des Materials ist, aus dem die Prismeneinheit 3 besteht. Damit tritt an der dünnen Schicht keine Totalreflexion gegen Luft, sondern gegen die Schicht auf.

Insbesondere tritt damit auch dann eine Totalreflexion bei bestimmten Winkeln auf, wenn die Brechungsindices der Materialien der Elemente 1 und 3 einen nur geringen Unterschied haben, oder das Material des Elements 1 sogar einen größeren Brechungsindex als das Material des Prismas 3 hat

Bei dem gezeigten Ausführungsbeispiel der Erfindung besteht die dünne Schicht aus MgF₂, das einen Brechungsindex von 1,38 aufweist. Die Prismeneinheit 3 besteht aus LaSF N31, das einen Brechungsindex von 1,88 aufweist, so daß die Brechungsindexdifferenz 0,5 beträgt. Bei einer Schichtdicke, die größer als 1,2 *λ ist, wobei λ eine typische Wellenlänge des verwendeten Lichts ist, erhält man eine praktisch verlustfreie Totalreflexion, wobei die aus MgF₂ bestehende dünne Schicht gleichzeitig zu einer Reflexminderung bei Transmission von ca. 50 % führt.

Bei dem gezeigten Ausführungsbeispiel beträgt die Blickrichtung 60°. Selbstverständlich kann die Erfindung auch bei Prismen für andere Blickrichtungen, wie beispielsweise 30°, 45°, 90° eingesetzt werden, wobei auf mechanische Abstandshalter auch dann verzichtet werden kann, wenn die plankonkave Linse 1 einen mit dem Brechungsindex der Prismeneinheit 3 vergleichbaren Brechungsindex hat.

Vorstehend ist die Erfindung anhand eines Ausführungsbeispiels ohne Beschränkungen des allgemeinen Erfindungsgedankens beschrieben worden. So kann die Prismeneinheit auch aus anderen Materialien als dem angegebenen Material bestehen; auch können für die dünne Schicht andere Materialien als MgF₂ oder aus mehreren Schichten bestehende Beschichtungen verwendet werden. Bei anderen Blickrichtungen ist die Form der Prismeneinheit entsprechend anzupassen.

## Patentansprüche

1. Endoskopobjektiv mit einer Blickrichtung, die mit der Längsachse des Endoskops einen Winkel ungleich 0° einschließt, mit
- einem Linsensystem (1,4,5), das das Objektfeld in eine Bildebene abbildet, die senkrecht zur Längsachse (12) angeordnet ist, und
- einer Prismeneinheit (3), die im Abbildungsweg nach dem distalen Fenster (1) des Endoskops angeordnet ist, und in der der Strahl an zwei Grenzflächen (2,31) reflektiert wird, so dass der Strahl in der Prismeneinheit (3) von der gewünschten Blickrichtung in die Längsachse (12) des Endoskops umgelenkt wird,
- wobei auf der Prismeneinheit (3) auf wenigstens einer Fläche (2) durch Aufdampfen eine Beschichtung aufgebracht ist, die wenigstens eine dünne Schicht aufweist, die einen Brechungsindex aufweist, der kleiner als der Brechungsindex des Materials ist, aus dem die Prismeneinheit (3) besteht, so dass die Totalreflexion gegen die Schicht erfolgt,
**dadurch gekennzeichnet, dass** die Beschichtung auf der Fläche (2) der Prismeneinheit (3) angeordnet ist, die dem distalen Fenster (1) des Endoskops zugewandt ist,
und
dass ein Element des Objektivs auf der Beschichtung auf der Fläche (2) der Prismeneinheit (3) angeordnet ist.

2. Endoskopobjektiv nach Anspruch 1,
**dadurch gekennzeichnet, dass** das Element und die Prismeneinheit (3) verkittet sind.

3. Endoskopobjektiv nach Anspruch 1 oder 2,
**dadurch gekennzeichnet, dass** das Element ein Keil ist, der die Blickrichtung zusätzlich ablenkt.

4. Endoskopobjektiv nach Anspruch 1 oder 2,
**dadurch gekennzeichnet, dass** das Element das distale Fenster (1) ist.

5. Endoskopobjektiv nach Anspruch 4,
**dadurch gekennzeichnet, dass** das distale Fenster (1) als plankonkave Linse ausgebildet ist.

6. Endoskopobjektiv nach einem der Ansprüche 1 bis 5,
**dadurch gekennzeichnet; dass** die Prismeneinheit (3) drei optisch wirksame Flächen aufweist, von denen
- die erste Fläche (2), durch die der vom Objektfeld kommende Strahl in die Prismeneinheit (3) eintritt, und auf die die Beschichtung aufgebracht ist, einen Winkel mit der Längsachse (5) des Endoskops einschließt, und
- die zweite Fläche (31) den Strahl zurück zur ersten Fläche (2) reflektiert, an der er totalreflektiert wird und
- eine dritte Fläche (32), durch die der Strahl austritt, senkrecht zur Längsachse (12) angeordnet ist.

7. Endoskopobjektiv nach Anspruch 6,
**dadurch gekennzeichnet, dass** lediglich auf die erste Fläche (2) eine Beschichtung aufgebracht ist.

8. Endoskopobjektiv nach Anspruch 6,
**dadurch gekennzeichnet, dass** die zweite Fläche (31) verspiegelt ist.

9. Endoskopobjektiv nach einem der Ansprüche 6 bis 8,
**dadurch gekennzeichnet, dass** das Prisma ein 60°-Prisma ist.

10. Endoskopobjektiv nach Anspruch 9,
**dadurch gekennzeichnet, dass** die zweite Fläche (31) parallel zur Längsachse (12) des Endoskops angeordnet ist.

11. Endoskopobjektiv nach einem der Ansprüche 6 bis 8,
**dadurch gekennzeichnet, dass** die zweite Fläche (31) einen Winkel mit der Längsachse (12) des Endoskops einschließt.

12. Endoskopobjektiv nach einem der Ansprüche 1 bis 11,
**dadurch gekennzeichnet, dass** die Beschichtung aus mehreren Schichten mit unterschiedlichem Brechungsindex besteht.

13. Endoskopobjektiv nach Anspruch 12,
**dadurch gekennzeichnet, dass** die Beachichtung eine Schicht mit niedrigerem Brechungsindex aufweist, als dem des Materials der Prismeneinheit (3).

14. Endoskopobjektiv nach Anspruch 12,
**dadurch gekennzeichnet, dass** die Beschichtung zwei oder mehr Schichten mit niedrigerem Brechungsindex aufweist, als dem des Materials der Prismeneinheit (3).

15. Endoskopobjektiv nach einem der Ansprüche 12 bis 14,
**dadurch gekennzeichnet, dass** die unterste Schicht eine niedrigbrechende Schicht ist, an der die Totalreflexion erfolgt.

16. Endoskopobjektiv nach einem der Ansprüche 12 bis 14,
**dadurch gekennzeichnet, dass** die unterste Schicht eine hochbrechende Schicht und insbesondere eine Haftvermittlungsschicht ist.

17. Endoskopobjektiv nach einem der Ansprüche 1 bis 11,
**dadurch gekennzeichnet, dass** die Beschichtung ein Einschicht-System ist.

18. Endoskopobjektiv nach einem der Ansprüche 1 bis 17,
**dadurch gekennzeichnet, dass** der Lichtdurchgang durch eine objektseitige Linse (1) des Linsensystems (1, 4, 5) schräg erfolgt.

## Claims

1. Endoscopic lens with a viewing direction enclosing an angle different from 0° relative to the longitudinal axis of the endoscope, comprising
- a lens system (1, 4, 5) imaging the object field into an imaging plane orthogonal on the longitudinal axis (12), and
- a prism unit (3) that is disposed in the imaging path downstream of the distal window (1) of the endoscope, wherein the beam is reflected at two interfaces (2, 31) in a way that the beam will be deflected from the viewing direction in the longitudinal axis (12) of the endoscope,
- with a coating being applied by vapour metallisation on at least one surface (2) of said prism unit (3) that comprises a least one thin layer whose refractory index is lower than the refractory index of the material of which said prism unit (3) is made, so that total reflection takes place against said layer,
**characterised in that** said coating is provided on that surface (2) of said prism unit (3), which is turned towards said distal window (1) of the endoscope, and
**in that** one element of the lens is provided on said coating in the surface (2) of said prism unit (3).

2. Endoscopic lens according to Claim 1,
**characterised in that** said element and said prism (3) are cemented against each other.

3. Endoscopic lens according to Claim 1 or 2,
**characterised in that** said element is a wedge for an additional deflection of the viewing direction.

4. Endoscopic lens according to Claim 1 or 2,
**characterised in that** said element is the distal window (1).

5. Endoscopic lens according to Claim 4,
**characterised in that** said distal window (1) is designed in the form of a plano-concave lens.

6. Endoscopic lens according to any of the Claims 1 to 5,
**characterised in that** said prism unit (3) comprises three optically active surfaces whereof
- the first surface (2), through which the beam arriving from the object field enters said prism unit (3) and on which said coating is applied, encloses an angle relative to the longitudinal axis (5) of the endoscope, and
- whereof the second surface (31) reflects the beam back towards said first surface (2) where it is totally reflected, and
- whereof a third surface (32), through which the beam exits, is disposed to be orthogonal on said longitudinal axis (12).

7. Endoscopic lens according to Claim 6,
**characterised in that** a coating is applied only on said first surface (2).

8. Endoscopic lens according to Claim 6,
**characterised in that** said second surface (31) is mirrored.

9. Endoscopic lens according to any of the Claims 6 to 8,
**characterised in that** said prism is a 60° prism.

10. Endoscopic lens according to Claim 9;
**characterised in that** said second surface (31) is arranged in parallel with the longitudinal axis (12) of the endoscope.

11. Endoscopic lens according to any of the Claims 6 to 8,
**characterised in that** said second surface (31) encloses an angle relative to the longitudinal axis (12) of the endoscope.

12. Endoscopic lens according to any of the Claims 1 to 11,
**characterised in that** said coating is constituted by a plurality of layers presenting different refractory indices.

13. Endoscopic lens according to Claim 12,
**characterised in that** said coating comprises at least one layer having a refractory index lower than that of the material of said prism unit (3).

14. Endoscopic lens according to Claim 12,
**characterised in that** said coating is constituted by two or more layers having a refractory index lower than that of the material of said prism unit (3).

15. Endoscopic lens according to any of the Claims 12 to 14,
**characterised in that** the lowermost layer is a layer of low refraction, on which total reflection occurs.

16. Endoscopic lens according to any of the Claims 12 to 14,
**characterised in that** the lowermost layer is a layer presenting a high refraction, and an adherence-imparting layer in particular.

17. Endoscopic lens according to any of the Claims 1 to 11,
**characterised in that** said coating is a single-layer system.

18. Endoscopic lens according to any of the Claims 1 to 17,
**characterised in that** the light passes through a lens (1) of said lens system (1, 4, 5) on the object side at an inclination.

## Revendications

1. Objectif d'endoscope à un sens de vue qui forme un angle différent de 0° relatif à l'axe longitudinal de l'endoscope, comprenant
- un système de lentilles (1, 4, 5) qui crée l'image du champ d'objet dans un plan d'image orthogonal sur l'axe longitudinal (12), et
- une unité de prisme (3), qui est disposée dans le trajet de projection en aval la fenêtre distale (1) de l'endoscope et dans laquelle le rayon est réfléchi à deux interfaces (2, 31) de façon que le rayon soit défléchi du sens de vue souhaité dans l'axe longitudinal (12) de l'endoscope,
- à un revêtement étant appliqué, par métallisation sous vide, sur au moins une surface (2) de ladite unité de prisme (3), qui comprend au moins une couche mince dont l'indice de réfraction est plus petit que l'indice de réfraction du matériau duquel est faite ladite unité de prisme (3), d'une manière que la réflexion totale se fasse vers ladite couche,
**caractérisé en ce que** ledit revêtement est disposé sur cette surface (2) de ladite unité de prisme (3), qui est tournée vers ladite fenêtre distale (1) de l'endoscope, et
**en ce qu'**un élément de l'objectif est disposé sur ledit revêtement sur la face (2) de ladite unité de prisme (3).

2. Objectif d'endoscope selon la revendication 1,
**caractérisé en ce que** ledit élément et ladite unité de prisme (3) sont cimentés l'un sur l'autre.

3. Objectif d'endoscope selon la revendication 1 ou 2,
**caractérisé en ce que** ledit élément est un coin pour une déflexion supplémentaire du sens de vue.

4. Objectif d'endoscope selon la revendication 1 ou 2,
**caractérisé en ce que** ledit élément est la fenêtre distale (1).

5. Objectif d'endoscope selon la revendication 4,
**caractérisé en ce que** ladite fenêtre distale (1) est configurée sous forme d'une lentille plane-concave.

6. Objectif d'endoscope selon une quelconque des revendications 1 à 5,
**caractérisé en ce que** ladite unité de prisme (3) comprend trois surfaces à efficacité optique, dont
- la première surface (2), à travers laquelle le rayon venant du champ d'objet, entre dans ladite unité de prisme (3) et sur laquelle est appliqué ledit revêtement, forme un angle relatif à l'axe longitudinal (5) de l'endoscope, et
- dont la deuxième surface (31) réfléchit le rayon en retour vers ladite première surface (2), à laquelle il subit une réflexion totale, et
- dont une troisième surface (32), par laquelle le rayon sort, est disposée en position orthogonale sur ledit axe longitudinal (12).

7. Objectif d'endoscope selon la revendication 6,
**caractérisé en ce qu'**un revêtement n'est appliqué que sur ladite première surface (2).

8. Objectif d'endoscope selon la revendication 6,
**caractérisé en ce que** ladite deuxième surface (31) est métallisée sous vide.

9. Objectif d'endoscope selon une quelconque des revendications 6 à 8,
**caractérisé en ce que** ledit prisme est un prisme à 60°.

10. Objectif d'endoscope selon la revendication 9,
**caractérisé en ce que** ladite deuxième surface (31) est disposée en parallèle à l'axe longitudinal (12) de l'endoscope.

11. Objectif d'endoscope selon une quelconque des revendications 6 à 8,
**caractérisé en ce que** ladite deuxième surface (31) forme un angle relatif à l'axe longitudinal (12) de l'endoscope.

12. Objectif d'endoscope selon une quelconque des revendications 1 à 11,
**caractérisé en ce que** ledit revêtement est composé d'une pluralité de couches aux indices de réfraction différents.

13. Objectif d'endoscope selon la revendication 12,
**caractérisé en ce que** ledit revêtement comprend au moins une couche à un indice de réfraction plus petit que l'indice du matériau de ladite unité de prisme (3).

14. Objectif d'endoscope selon la revendication 12,
**caractérisé en ce que** ledit revêtement est composé de deux ou plus couches à un indice de réfraction plus petit que l'Indice du matériau de ladite unité de prisme (3).

15. Objectif d'endoscope selon une quelconque des revendications 12 à 14,
**caractérisé en ce que** la couche la plus basse est une couche à basse réfraction, à laquelle se fait la réflexion totale.

16. Objectif d'endoscope selon une quelconque des revendications 12 à 14,
**caractérisé en ce que** la couche la plus basse est une couche à haute réfraction, et une couche de communication d'adhérence en particulier.

17. Objectif d'endoscope selon une quelconque des revendications 1 à 11,
**caractérisé en ce que** ledit revêtement est un système à une seule couche.

18. Objectif d'endoscope selon une quelconque des revendications 1 à 17,
**caractérisé en ce que** le passage de la lumière se fait à travers d'une lentille (1), du côté de l'objet, dudit système de lentilles (1, 4, 5) à une inclinaison.
